# EUROPEAN PATENT SPECIFICATION

(11) **EP 3 834 215 B1**
(45) Date of publication and mention of the grant of the patent: **21.09.2022**
(21) Application number: 19739260.8
(22) Date of filing: 09.07.2019
(51) Int. Cl.: H01F 27/36, H02J 7/02, H02J 50/10, H02J 7/00, H02J 50/70

(54) **WIRELESS CHARGING DEVICE AND METHOD FOR CONTROLLING A WIRELESS CHARGING DEVICE**
DRAHTLOSE LADEVORRICHTUNG UND VERFAHREN ZUR STEUERUNG EINER DRAHTLOSEN LADEVORRICHTUNG
DISPOSITIF DE CHARGE SANS FIL ET PROCÉDÉ DE COMMANDE D'UN DISPOSITIF DE CHARGE SANS FIL

(30) Priority: 09.08.2018 CN 201810902245
(43) Date of publication of application: 16.06.2021
(73) Proprietor: Valeo Comfort and Driving Assistance, 94046 Créteil Cedex (FR)
(72) Inventor: SCHULER, Stephane, 94046 Créteil CEDEX (FR)
(74) Representative: Delaval, Guillaume Laurent
(86) International application number: PCT/EP2019/068454
(87) International publication number: WO 2020/030368

(56) References cited:
- US-A1- 2013 257 366
- US-A1- 2014 197 782

## Description

### TECHNICAL FIELD OF THE INVENTION

The invention relates to wireless charging of electronic devices.

More precisely the invention relates to a wireless charging device and to a method for controlling a wireless charging device.

### BACKGROUND INFORMATION AND PRIOR ART

Devices suitable for wirelessly charging electronic devices, such as smartphones, are known.

Such wireless charging devices generally comprise at least a charging antenna and a driver circuit electrically connected to said charging antenna to inject an alternating current in said charging antenna such that said charging antenna produces an alternating magnetic field. Currently, a well known standard is for example the Qi standard provided by the Wireless Power Consortium.

In order to comply with the ICNIRP (International Commission on Non Ionizing Radiation Protection) guidelines for limiting exposure to time-varying electric, magnetic and electromagnetic fields, the wireless charging device includes a shielding pattern (often called a re-radiation antenna) facing said charging antenna and conductively connected to a point having a fixed electric potential (typically ground).

Such a shielding pattern makes it possible to decrease notably the radiated electric field, without significantly affecting the magnetic field that is used for the charging function.

Document US 2013/257366 A1 discloses a wireless charging transmitter comprising a comb-structured shielding layer.

### SUMMARY OF THE INVENTION

In this context, the invention provides a wireless charging device comprising at least a charging antenna, a driver circuit electrically connected to said charging antenna and injecting an alternating current in said charging antenna such that said charging antenna produces an alternating magnetic field, a shielding pattern covering said charging antenna and conductively connected to a point having a fixed electric potential, characterized by a detection circuit designed to detect whether an electric potential of said shielding pattern is equal to said fixed electric potential.

Such a detection circuit makes it possible to check that the shielding pattern has the expected fixed electric potential (in practice: that the shielding pattern is correctly grounded) and effectively performs its protection function of attenuating the radiated electric field. Appropriate measures (such as nullifying the alternating current injected into the charging antenna) may then be taken if the shielding pattern does not properly perform this protection function. Safety is thus enhanced.

According to possible optional features:
- said detection circuit includes a voltage measuring circuit suitable to measure the electric potential of a test point, and/or a conductive element connecting said test point to said shielding pattern;
- said detection circuit includes a voltage source generating a pull-up electric potential distinct from said fixed electric potential, and/or a resistive element interposed between said voltage source and said test point;
- the wireless charging device comprises a control unit suitable for controlling a power of said alternating current;
- said control unit includes said voltage measuring circuit;
- said measuring circuit includes an analog-to-digital converter of said control unit;
- said control unit is configured to nullify said alternating current if said detection circuit detects that said electric potential of said shielding pattern is not equal to said fixed electric potential;
- said fixed electric potential is a ground potential.

The invention also provides a method for controlling a wireless charging device comprising a driver circuit electrically connected to a charging antenna and a shielding pattern covering said charging antenna and conductively connected to a point having a fixed electric potential, said method comprising the following steps:
- injecting, by said driver circuit, an alternating current in said charging antenna such that said charging antenna produces an alternating magnetic field;
- detecting whether an electric potential of said shielding pattern is equal to said fixed electric potential.

This method may also comprise a step of nullifying said alternating current if said electric potential of said shielding pattern is not equal to said fixed electric potential.

Other features and benefits of the embodiments of the present invention will be better understood upon reading of preferred embodiments thereof with reference to the appended drawings.

### BRIEF DESCRIPTION OF THE DRAWINGS

Figure 1 schematically represents a section of a wireless charging device according to the invention;
Figure 2 is an electric diagram of the wireless charging device of Figure 1;
Figure 3 is a perspective view of the main elements of another embodiment of a wireless charging device according to the invention;
Figure 4 is another perspective view of the wireless charging device of Figure 3.

### DETAILED DESCRIPTION OF EXAMPLE(S)

Although two embodiments of a wireless charging device according to the invention are shown in the figures, the same reference numbers will be used to throughout the description of these embodiments.

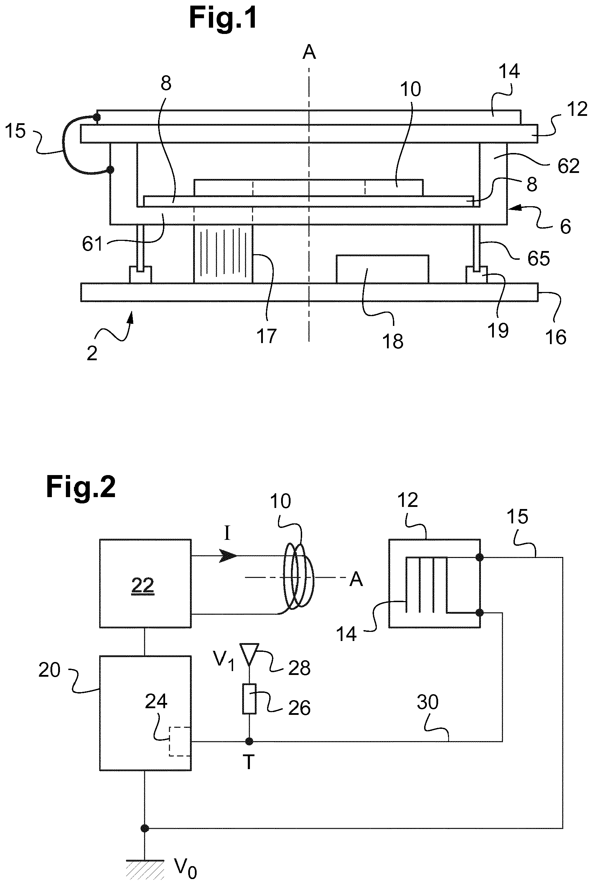

Figure 1, 3 and 4 show a wireless charging device 2 according to the invention. In the present example, this wireless charging device 2 is integrated in a vehicle, e.g. in the passenger compartment of the vehicle.

The wireless charging device 2 comprises a printed circuit board 16 and a chassis 6. The printed circuit board 16 implements the necessary hardware and software to control the wireless charging function as for example required by the Qi standard released by the Wireless Power Consortium.

The chassis 6 has at least a base 61 (extending here parallel to the printed circuit board 16) and an optional peripheral wall 62 extending away from the base 61 (from the face carrying the antenna 10 as described below), here on the whole periphery of the chassis 6.

The wireless charging device 2 also comprises a ferrite element 8 and a charging antenna 10 (here a coil antenna). In the present example, the ferrite element 8 is carried by the base 61 of the chassis 6 (and in contact with the base 61 of the chassis 6); the charging antenna 10 extends on top of the ferrite element 8 (*i.e.* the ferrite element 8 is situated between the base 61 of the chassis 6 and the coil antenna 10). The coil antenna 10 may be stuck to the ferrite or not depending on the construction selected by the designer.

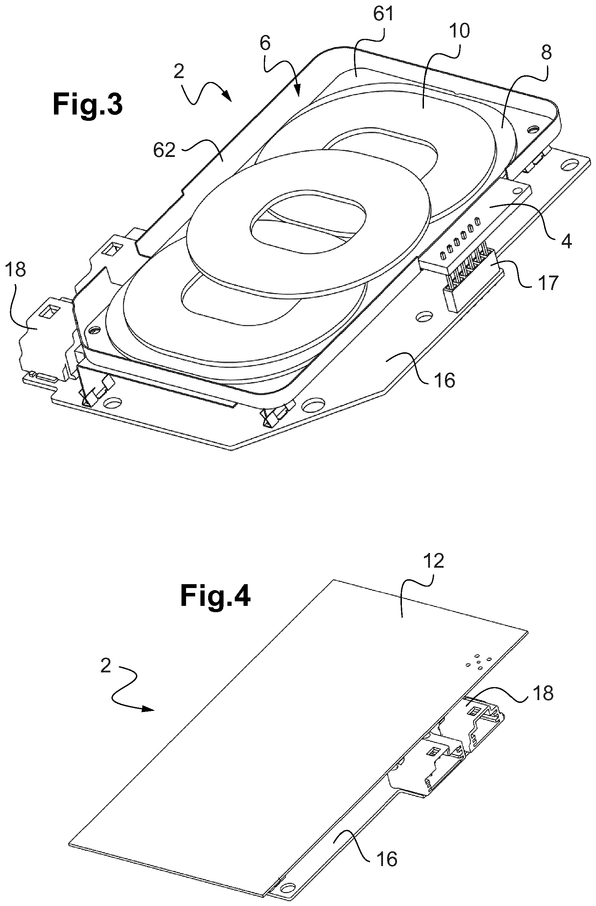

It may be noted in this respect that, in the embodiment of Figure 1, a single charging antenna is used, whereas, in the embodiment of Figure 3, a plurality of charging antennas (here 3 charging antennas) are used.

As seen in the figures, in the described examples, the charging coil antenna 10 (here, as well as the ferrite element 8) is located in a recess formed in the chassis 6, here a recess delimited by the peripheral wall 62 of the chassis 6. The charging coil antenna 10 (here, as well as the ferrite element 8) is thus surrounded by the peripheral wall 62 of the chassis 6.

In the present examples, the chassis 6 is formed of metal and is grounded so as to form a shield filtering electromagnetic waves.

In the present examples, the chassis 6 (and thus the ferrite element 8 and the charging coil antenna 10) is mounted on the printed circuit board 16, here by means of metal terminals 65 coupled to the chassis 6 and engaging metal clips 19 (e.g. X-clips) soldered to the printed circuit board 16. The metal terminals 65 may be formed integral with the chassis 6 (by bending), for instance.

The ground potential may in part be connected to the printed circuit board 16 to the chassis 6 via the metal clips 19 and the metal terminals 65.

The printed circuit board 16 carries an external connector 18 for connecting the electronic components of the wireless charging device 2, *i.e.* the components shown in Figure 2 (in particular a control circuit 20), to an external circuit, such as an electronic control unit of the vehicle in the present example.

The wireless charging device 2 also comprises a shielding printed circuit board 12 carrying a shielding pattern 14 (usually termed *"re-radiation antenna"*)*.* The charging coil antenna 10 is here connected directly to the printed circuit board 16 (via the inter-connector 17 mentioned below). According to a possible variation however, the charging coil antenna 10 may be mounted to the shielding printed circuit board 12 (on the face of the shielding printed circuit board 12 opposite the face carrying the shielding pattern 14) and/or connected to the shielding printed circuit board 12.

The wireless charging device 2 also includes an inter-connector 17 connecting electronic components carried by the printed circuit board 16 (here a driver circuit 22) and the charging coil antenna 10. In the variation just mentioned where the charging coil antenna 10 is carried by the shielding printed circuit board 12, this inter-connector 17 connects the printed circuit board 16 and the shielding printed circuit board 12.

As visible in Figure 3, in the present examples where the charging coil antenna 10 lies on the chassis 6, a connection board 4 may be affixed to the chassis 6 to form the electrical connections between the inter-connector 17 and the charging antenna 10. Precisely, the charging antenna 10 may be connected to conductive pads formed on the connection board 4, each conductive pad being connected to a conductive wire of the inter-connector 17 (connecting them to the driver circuit 22).

The printed circuit board 16 carries the driver circuit 22 (also visible in Figure 2). This driver circuit 22 is electrically connected to the charging coil antenna 10 (here via the inter-connector 17, as explained above) and injects an alternating current I in the charging coil antenna 10 so as to produce an alternating magnetic field, here along a direction A (shown in Figure 1 and corresponding to an axis of revolution of the charging antenna 10).

This alternating magnetic field is meant to power and charge an electronic device placed in the vicinity of the wireless charging device 2 (preferably located in the direction A mentioned above).

The shielding printed circuit board 12 is mounted over the charging coil antenna 10 (here without contacting the charging coil antenna 10). In the present example, the shielding printed circuit board 12 is mounted on the chassis 6, precisely by abutting the peripheral wall 62 of the chassis 6.

The shielding printed circuit board 12 thus extends beyond the peripheral wall 62 of the chassis 6 (in at least one lateral direction perpendicular to the axis A) and therefore covers the whole area facing the charging coil antenna 10. In the present examples, the shielding printed circuit board 12 closes the recess formed in the chassis 6 and receiving the charging antenna 10 (and here the ferrite element 8), as mentioned above.

The shielding pattern 14 extends over a major portion of the face of the shielding printed circuit board 12 (here over the whole face of the shielding printed circuit board 12) so that the shielding pattern 14 extends laterally (along at least one direction perpendicular to the axis A) beyond the charging coil antenna 10 and thus also covers the charging coil antenna 10. As schematically represented in Figure 2, the shielding pattern 14 may be designed to have the form of a comb, for instance.

As visible in Figure 1, in the present examples, the shielding pattern 14 extends on the face of the shielding printed circuit board 12 directed away from the charging coil antenna 10. According to a possible variation however, the shielding pattern 14 may extend on the face of the shielding printed circuit board 12 facing the charging coils antenna 10. It could also be embedded in the shielding printed circuit board 12 inner layers when applicable.

The shielding pattern 14 is grounded: the shielding pattern 14 is conductively connected to a point having a ground potential Vo, here thanks to a conductor schematically shown as reference 15 in the Figures.

In practice, this conductor 15 can be implemented by a clip interposed between the chassis 6 and the shielding printed circuit board 12, for instance. The conductor 15 may be an X-clip mounted on the lateral edge of the shielding printed circuit board 12, a first end of the X-clip contacting the shielding pattern 14 and a second end of the X-clip contacting the chassis 6 (precisely here the lateral wall 62 of the chassis 6).

As the shielding pattern 14 is grounded and extends over the charging antenna 10, the shielding pattern 14 attenuates the electric field co-occurring with the magnetic field produced by the charging antenna 10, without significantly affecting this magnetic field. Its purpose is to minimize the electric fields escaping the application hence improving the safety of the persons located nearby.

Figure 2 is an electric diagram showing some of the elements already mentioned.

As seen in Figure 2, the control circuit 20 is connected to the driver circuit 22 and is designed to control the amplitude (and hence the power) of the alternating current I injected by the driver circuit 22 into the charging coil antenna 10.

As already explained, the shielding pattern 14 is grounded by being connected to the ground potential Vo via the conductor 15.

The control unit 20 includes a voltage measuring circuit 24 (here an analog-to-digital converter) electrically connected to a test point T in order to measure the electric potential of this test point T.

The wireless charging device 2 includes a conductive element 30 connecting the test point T to the shielding pattern 14 such that the electric potential of the test point T is representative of the electric potential of the shielding pattern 14. At least part of the conductive element 30 is for instance a conductive wire of the inter-connector 17.

The voltage measuring circuit 24 can thus detect whether the electric potential of the shielding pattern 14 is equal to the ground potential Vo, as expected for the effective operation of the shielding pattern 14.

In the present example, the wireless charging device 2 also includes a voltage source 28 generating a pull-up electric potential V₁ distinct from the ground potential Vo, and a resistive element 26 interposed between the voltage source 28 and the test point T.

The voltage source 28 may for instance also power an electronic component carried by the application printed circuit 16 (such as the control circuit 20).

The voltage source 28 and the resistive element 26 provide an exemplary construction to ensure that the electric potential of the test point T deviates from the ground potential Vo when the shielding pattern 14 is not correctly grounded (and may thus be ineffective).

The voltage measuring circuit 24, the conductive element 30, the voltage source 28 and the resistive element 26 thus form a detection circuit suitable for detecting whether or not the electric potential of the shielding pattern 14 is equal to the expected fixed electric potential (here the ground potential Vo).

If the voltage measuring circuit 24 detects that the electric potential of the shielding pattern 14 is not equal to the ground potential Vo (*i.e.* in practice deviates of more than a predetermined threshold compared to the ground potential Vo), it is proposed here that the control circuit 20 nullifies the alternating current I injected into the charging antenna 10 so as to prevent the leakage of an electric field (the amplitude of which would possibly not be reduced by the shielding pattern 14 as this shielding pattern 14 is considered to be ineffective in this situation, as explained above).

## Claims

1. Wireless charging device (2) comprising:
- at least a charging antenna (10);
- a driver circuit (22) electrically connected to said charging antenna (10) and injecting an alternating current (I) in said charging antenna (10) such that said charging antenna (10) produces an alternating magnetic field;
- a shielding pattern (14) covering said charging antenna (10) and conductively connected to a point having a fixed electric potential (V₀);
**characterized by** a detection circuit (24, 26, 28, 30) designed to detect whether an electric potential of said shielding pattern (14) is equal to said fixed electric potential (V₀).

2. Wireless charging device according to claim 1, wherein said detection circuit includes a voltage measuring circuit (24) suitable to measure the electric potential of a test point (T), and a conductive element (30) connecting said test point (T) to said shielding pattern (14).

3. Wireless charging device according to claim 2, wherein said detection circuit includes a voltage source (28) generating a pull-up electric potential (V₁) distinct from said fixed electric potential (V₀), and a resistive element (26) interposed between said voltage source (28) and said test point (T).

4. Wireless charging device according to any of claims 1 to 3, comprising a control unit (20) suitable for controlling a power of said alternating current (I).

5. Wireless charging device according to claim 4 taken as dependent upon claims 2 or 3, wherein said control unit (20) includes said voltage measuring circuit (24).

6. Wireless charging device according to claim 5, wherein said measuring circuit (24) includes an analog-to-digital converter of said control unit (20).

7. Wireless charging device according to any of claims 4-6, wherein said control unit (20) is configured to nullify said alternating current (I) if said detection circuit (24, 26, 28, 30) detects that said electric potential of said shielding pattern (14) is not equal to said fixed electric potential (V₀).

8. Wireless charging device according to any of claims 1-7, wherein said fixed electric potential (V₀) is a ground potential.

9. Method for controlling a wireless charging device (2) comprising a driver circuit (22) electrically connected to a charging antenna (10) and a shielding pattern (14) covering said charging antenna (10), said shielding pattern being conductively connected to a point having a fixed electric potential (V₀), said method comprising the following steps:
- injecting, by said driver circuit (22), an alternating current (I) in said charging antenna (10) such that said charging antenna (10) produces an alternating magnetic field;
- detecting whether an electric potential of said shielding pattern (14) is equal to said fixed electric potential (V₀).

10. Method according to claim 9, comprising a step of nullifying said alternating current (I) if said electric potential of said shielding pattern (14) is not equal to said fixed electric potential (V₀).

## Patentansprüche

1. Drahtlosladeeinrichtung (2), umfassend:
- mindestens eine Ladeantenne (10);
- eine Treiberschaltung (22), die elektrisch mit der Ladeantenne (10) verbunden ist und einen Wechselstrom (I) in die Ladeantenne (10) einkoppelt, so dass die Ladeantenne (10) ein magnetisches Wechselfeld erzeugt;
- ein Abschirmmuster (14), das die Ladeantenne (10) bedeckt und leitend mit einem Punkt mit einem festen elektrischen Potential (V₀) verbunden ist;
**gekennzeichnet durch** eine Detektionsschaltung (24, 26, 28, 30), die ausgelegt ist zu detektieren, ob ein elektrisches Potential des Abschirmmusters (14) gleich dem festen elektrischen Potential (V₀) ist.

2. Drahtlosladeeinrichtung nach Anspruch 1, wobei die Detektionsschaltung eine Spannungsmessschaltung (24) enthält, die geeignet ist, um das elektrische Potential eines Testpunkts (T) zu messen, und ein leitfähiges Element (30), das den Testpunkt (T) mit dem Abschirmmuster (14) verbindet.

3. Drahtlosladeeinrichtung nach Anspruch 2, wobei die Detektionsschaltung eine Spannungsquelle (28) enthält, die ein elektrisches Pull-up-Potential (V₁)generiert, das von dem festen elektrischen Potential (V₀) verschieden ist, und ein resistives Element (26), das zwischen der Spannungsquelle (28) und dem Testpunkt (T) angeordnet ist.

4. Drahtlosladeeinrichtung nach einem der Ansprüche 1 bis 3, umfassend eine Steuereinheit (20), die geeignet ist zum Steuern einer Leistung des Wechselstroms (I).

5. Drahtlosladeeinrichtung nach Anspruch 4, genommen als abhängig von Ansprüchen 2 oder 3, wobei die Steuereinheit (20) die Spannungsmessschaltung (24) enthält.

6. Drahtlosladeeinrichtung nach Anspruch 5, wobei die Messschaltung (24) einen Analog-Digital-Wandler der Steuereinheit (20) enthält.

7. Drahtlosladeeinrichtung nach einem der Ansprüche 4-6, wobei die Steuereinheit (20) ausgelegt ist zum Aufheben des Wechselstroms (I), falls die Detektionsschaltung (24, 26, 28, 30) detektiert, dass das elektrische Potential des Abschirmmusters (14) nicht gleich dem festen elektrischen Potential (V₀) ist.

8. Drahtlosladeeinrichtung nach einem der Ansprüche 1-7, wobei das feste elektrische Potential (V₀) ein Massepotential ist.

9. Verfahren zum Steuern einer Drahtlosladeeinrichtung (2), umfassend eine Treiberschaltung (22), die elektrisch mit einer Ladeantenne (10) verbunden ist, und einem Abschirmmuster (14), das die Ladeantenne (10) bedeckt, wobei das Abschirmmuster leitend mit einem Punkt mit einem festen elektrischen Potential (V₀) verbunden ist, wobei das Verfahren die folgenden Schritte umfasst:
- Einkoppeln, durch die Treiberschaltung (22), eines Wechselstroms (I) in die Ladeantenne (10), so dass die Ladeantenne (10) ein magnetisches Wechselfeld erzeugt;
- Detektieren, ob ein elektrisches Potential des Abschirmmusters (14) gleich dem festen elektrischen Potential (V₀) ist.

10. Verfahren nach Anspruch 9, umfassend einen Schritt des Aufhebens des Wechselstroms (I), falls das elektrische Potential des Abschirmmusters (14) nicht gleich dem festen elektrischen Potential (V₀) ist.

## Revendications

1. Dispositif de charge sans fil (2) comprenant :
- au moins une antenne de charge (10) ;
- un circuit d'excitation (22) connecté électriquement à ladite antenne de charge (10) et injectant un courant alternatif (I) dans ladite antenne de charge (10) de telle sorte que ladite antenne de charge (10) produit un champ magnétique alternatif ;
- un motif de blindage (14) couvrant ladite antenne de charge (10) et connecté de manière conductrice à un point possédant un potentiel électrique fixé (V₀) ;
**caractérisé par** un circuit de détection (24, 26, 28, 30) conçu pour détecter si un potentiel électrique dudit motif de blindage (14) est égal audit potentiel électrique fixé (V₀).

2. Dispositif de charge sans fil selon la revendication 1, ledit circuit de détection comportant un circuit de mesure de tension (24) adapté à la mesure du potentiel électrique d'un point de test (T), et un élément conducteur (30) connectant ledit point de test (T) audit motif de blindage (14).

3. Dispositif de charge sans fil selon la revendication 2, ledit circuit de détection comportant une source de tension (28) générant un potentiel électrique de rappel vers le haut (V₁) distinct dudit potentiel électrique fixé (V₀), et un élément résistif (26) interposé entre ladite source de tension (28) et ledit point de test (T).

4. Dispositif de charge sans fil selon l'une quelconque des revendications 1 à 3, comprenant une unité de commande (20) adaptée à la commande d'une puissance dudit courant alternatif (I).

5. Dispositif de charge sans fil selon la revendication 4 considérée comme dépendant de la revendication 2 ou 3, ladite unité de commande (20) comportant ledit circuit de mesure de tension (24).

6. Dispositif de charge sans fil selon la revendication 5, ledit circuit de mesure (24) comportant un convertisseur analogique-numérique de ladite unité de commande (20).

7. Dispositif de charge sans fil selon l'une quelconque des revendications 4 à 6, ladite unité de commande (20) étant configurée pour annuler ledit courant alternatif (I) si ledit circuit de détection (24, 26, 28, 30) détecte que ledit potentiel électrique dudit motif de blindage (14) n'est pas égal audit potentiel électrique fixé (V₀).

8. Dispositif de charge sans fil selon l'une quelconque des revendications 1 à 7, ledit potentiel électrique fixé (V₀) étant un potentiel de masse.

9. Procédé de commande d'un dispositif de charge sans fil (2) comprenant un circuit d'excitation (22) connecté électriquement à une antenne de charge (10) et un motif de blindage (14) couvrant ladite antenne de charge (10), ledit motif de blindage étant connecté de manière conductrice à un point possédant un potentiel électrique fixé (V₀), ledit procédé comprenant les étapes suivantes :
- l'injection, par ledit circuit d'excitation (22), d'un courant alternatif (I) dans ladite antenne de charge (10) de telle sorte que ladite antenne de charge (10) produit un champ magnétique alternatif ;
- le fait de détecter si un potentiel électrique dudit motif de blindage (14) est égal audit potentiel électrique fixé (V₀).

10. Procédé selon la revendication 9, comprenant une étape d'annulation dudit courant alternatif (I) si ledit potentiel électrique dudit motif de blindage (14) n'est pas égal audit potentiel électrique fixé (V₀).
